(19)

Europäisches
Patentamt

European
Patent Office

Office européen
des brevets

(11) **EP 3 306 828 B1**

(12) **EUROPEAN PATENT SPECIFICATION**

(45) Date of publication and mention
of the grant of the patent:
**05.06.2019   Bulletin 2019/23**

(51) Int Cl.:
**H04B 7/024** *(2017.01)*      **H04W 92/20** *(2009.01)*

(21) Application number: **16192880.9**

(22) Date of filing: **07.10.2016**

(54) **METHOD FOR DETERMINING A PRECODER IN A DISTRIBUTED FASHION**

VERFAHREN ZUR BESTIMMUNG EINES VORCODIERERS AUF VERTEILTE ART

PROCÉDÉ DE DÉTERMINATION D'UN PRÉCODEUR DE FAÇON DISTRIBUÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.04.2018   Bulletin 2018/15**

(73) Proprietors:
• **Mitsubishi Electric R&D Centre Europe B.V.
1119 NS  Schiphol Rijk (NL)**
Designated Contracting States:
**FR**
• **Mitsubishi Electric Corporation
Chiyoda-ku
Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventors:
• **LI, Qianrui
35708 Rennes Cedex 7 (FR)**
• **GRESSET, Nicolas
35708 Rennes Cedex 7 (FR)**

(74) Representative: **Cabinet Le Guen Maillet
3, impasse de la Vigie
CS 71840
35418 Saint-Malo Cedex (FR)**

(56) References cited:
**WO-A1-2014/026556      US-A1- 2015 215 934
US-B2- 8 588 801**

• **LAKSHMANA TILAK RAJESH ET AL: "Improved
Local Precoder Design for JT-CoMP With
Periodical Backhaul CSI Exchange", IEEE
COMMUNICATIONS LETTERS, IEEE SERVICE
CENTER, PISCATAWAY, NJ, US, vol. 20, no. 3, 1
March 2016 (2016-03-01), pages 566-569,
XP011602280, ISSN: 1089-7798, DOI:
10.1109/LCOMM.2016.2518184 [retrieved on
2016-03-08]**

**Description**

The present invention generally relates to determining, in a distributed fashion, precoders to be applied for transmitting data between a plurality of transmitters and a plurality of receivers in a wireless communication system in which the plurality of transmitters is interconnected by coordination links with limited data rate.

Wireless communication systems may rely on cooperation in order to improve their performance with regard to their environment. Such cooperation may be found in a context of a MIMO (*Multiple-Input Multiple-Output*) channel-based communications network in which node devices, typically access points such as base stations or eNodeBs, cooperate in order to improve overall robustness of communications via the MIMO channel.

Such cooperation typically relies on data exchanges in between the node devices of the MIMO channel-based communications network, so as to define a precoder to be cooperatively applied by transmitters of the wireless communication network in order to mitigate impact of the environment. Difficulties exist when such data exchanges are performed over coordination links that have limited data rate, which involves applying quantization operations on the data to be exchanged. Indeed, quantization errors refrain from implementing a distributed way of determining the precoder to be cooperatively applied. Moreover, CSIT (Channel State Information at the Transmitter) mismatch amplifies the feeling that a distributed approach would be irrelevant for determining such a precoder to be cooperatively applied.

US 8588801 B2 discloses a method for performing coordinated precoding in a Coordinated Multipoint (CoMP) set up, wherein a serving base station determines based on the channel state information received from neighboring base stations a CoMP transmission set, calculates the precoders for the transmission set, and forwards the calculated precoders via backhaul to the base stations in the transmission set. The base stations in the transmission set apply the received precoders for DL transmissions to the served user equipment.

It is desirable to overcome the aforementioned drawbacks of the prior art. It is more particularly desirable to provide a distributed way for determining a precoder to be cooperatively applied in a MIMO channel-based communications network so as to improve transmissions via the MIMO channel-based communications network, despite quantization operations implied by limited rates of coordination links used to exchange short-term data needed to determine said precoder.

To that end, the present invention concerns a method implemented by one transmitter, referred to as *j*-th transmitter, among a plurality of $K_t$ transmitters of a wireless communication system for performing transmissions from the $K_t$ transmitters to a plurality of $K_r$ receivers via a global MIMO channel *H* thanks to an overall precoder *V* to be determined in a distributed fashion, said transmitters being interconnected by coordination links with limited data rate implying quantization operations. The method is such that said *j*-th transmitter performs:

- determining an initial version $\tilde{V}^{(j)}$ of the overall precoder *V* from its own view $\hat{H}^{(j)}$ of the global MIMO channel *H*;
- quantizing the determined initial version $\tilde{V}^{(j)}$ of the overall precoder *V* for further transmissions to the other transmitters among the $K_t$ transmitters via the coordination links, thus implying quantization errors, and transmitting accordingly quantized versions of the initial version $\tilde{V}^{(j)}$ of the overall precoder *V;*
- receiving from each other *i*-th transmitter, via the respective coordination link $\ell_{i,j}$, a quantized version $W^{(i,j)}$ of an initial version of the overall precoder *V that* said other transmitter has determined from its own view $\hat{H}^{(i)}$ of the global MIMO channel *H,* wherein *i* from 1 to $K_t$, $i \neq j$,
- obtaining statistical distributions of the quantization errors incurred by the transmissions of the quantized versions of the initial versions of the overall precoder *V* on the respective coordination links;

- optimizing a set of matrices parameters $A_i^{(j)}$ of a multivariate combination function *f* combining the quantized versions $W^{(i,j)}$ of the initial versions of the overall precoder *V* so as to obtain an adjusted own view $\tilde{V}^{(j)}$ of the overall precoder *V,* wherein $W^{(j,j)}$ is considered as equivalent to the determined initial version $\tilde{V}^{(j)}$ of the overall precoder *V,* and wherein the matrices parameters $A_i^{(j)}$ are optimized with respect to an estimation $g^{(j)}$ of a figure of merit *g* representative of performance of the transmissions from the $K_t$ transmitters to the $K_r$ receivers, while considering said own view $\hat{H}^{(j)}$ of the global MIMO channel *H* instead of the effective global MIMO channel *H*, further considering an estimation of the set of adjusted own views $\{\tilde{V}^{(j')}\}_{j' \in [1, K_t]}$ of the overall precoder *V* instead of the effective adjusted precoders $\{\tilde{V}^{(j')}\}_{j' \in [1, K_t]}$ obtained by said other transmitters, further considering the following relationship:

$$W^{(i,j')} = W^{(i,j)} + \eta^{(i,j')} - \eta^{(i,j)}$$

wherein $\eta^{(i,j')}$ represents quantization errors on the coordination link $\ell_{i,j'}$, and respectively $\eta^{(i,j)}$ represents quan-

tization errors on the coordination link $\ell_{i,j}$, wherein $j'$ from 1 to $K_t$, $j' \neq j$,
and further considering the obtained statistical distributions of the quantization errors instead of the effective quantization errors; and

- participating in said transmissions by applying a precoder that is formed by a part of the adjusted own view $\tilde{V}^{(j)}$ of the overall precoder $V$ which relates to said $j$-th transmitter among said plurality of $K_t$ transmitters.

Thus, the overall precoder $V$ to be cooperatively applied by said plurality of transmitters can be estimated in a distributed fashion and be used to improve performance of the transmissions of data via the global MIMO channel $H$, despite the quantization operations implied by limited rates of coordination links used to exchange short-term data needed to estimate said overall precoder $V$.

According to a particular feature, the multivariate combination function $f$ is defined in one of the following forms:

$$f_{\left\{A_i^{(j)}\right\}_{i\in[1,K_t]}}\left(\left\{W^{(i,j)}\right\}_{i\in[1,K_t]}\right) = \sum_{\substack{i=1 \\ K_t}}^{K_t}\left(A_i^{(j)}W^{(i,j)}\right)$$

$$f_{\left\{A_i^{(j)}\right\}_{i\in[1,K_t]}}\left(\left\{W^{(i,j)}\right\}_{i\in[1,K_t]}\right) = \sum_{\substack{i=1 \\ K_t}}^{K_t}\left(W^{(i,j)}A_i^{(j)}\right)$$

$$f_{\left\{A_i^{(j)}\right\}_{i\in[1,K_t]}}\left(\left\{W^{(i,j)}\right\}_{i\in[1,K_t]}\right) = \sum_{i=1}^{K_t}\left(W^{(i,j)} + A_i^{(j)}\right)$$

$$f_{\left\{A_i^{(j)}\right\}_{i\in[1,K_t]}}\left(\left\{W^{(i,j)}\right\}_{i\in[1,K_t]}\right) = \sum_{i=1}^{K_t}\left((W^{(i,j)})^{-1} + \left(A_i^{(j)}\right)^{-1}\right)^{-1}$$

Thus, improvement of the estimation of the overall precoder $V$ is achieved in a simple manner.
According to a particular feature, the figure of merit $g$ is defined as follows:

$$g\left(H,\left\{\tilde{V}^{(j')}\right\}_{j'\in[1,K_t]}\right) = \log_2 \det\left|I + H\begin{bmatrix}E_1\tilde{V}^{(1)} \\ \vdots \\ E_{K_t}\tilde{V}^{(K_t)}\end{bmatrix}\begin{bmatrix}E_1\tilde{V}^{(1)} \\ \vdots \\ E_{K_t}\tilde{V}^{(K_t)}\end{bmatrix}^\dagger H^\dagger\right|$$

wherein $I$ is an identity matrix, and wherein $E_j$ is an $M \times NK_r$ matrix such that:

$$E_j = \begin{bmatrix}0_{M\times(j-1)M} , I_{M\times M} , 0_{M\times(K_t-j)M}\end{bmatrix}$$

wherein $0_{M\times(j-1)M}$ represents an $M \times (j - 1)M$ sub-matrix containing only zeros, $0_{M\times(K_t-j)M}$ represents an $M \times (K_t - j)M$ sub-matrix containing only zeros, and $I_{M\times M}$ represents an $M \times M$ identity sub-matrix,
and said $j$-th transmitter among said plurality of $K_t$ transmitters uses, in the expression of the figure of merit $g$, an estimation of $\{W^{(i,j')}\}_{i\in[1,K_t]}$ by relying on $\{W^{(i,j)}\}_{i\in[1,K_t]}$ and on the statistical distributions of the quantization errors $\eta^{(i,j')}$ and $\eta^{(i,j)}$.

Thus, the performance of the transmissions of data via the global MIMO channel is improved regarding a sum rate criterion.

According to a particular feature, the figure of merit $g$ is defined as follows:

$$g\left(H, \{\tilde{V}^{(j')}\}_{j' \in [1, K_t]}\right) = \sum_{k=1}^{K_r} Trace\left(I + B_k^\dagger H_k^\dagger \left(I + \sum_{\ell \neq k}^{K_r} H_k B_\ell B_\ell^\dagger H_k^\dagger\right) H_k B_k\right)$$

wherein

$$B_k = \begin{bmatrix} E_1 \tilde{V}^{(1)} \\ \vdots \\ E_{K_t} \tilde{V}^{(K_t)} \end{bmatrix} e_k$$

with

$$e_k = \left[0_{N \times (k-1)N}, I_{N \times N}, 0_{N \times (K_r - k)N}\right]^T$$

and wherein $E_j$ is an M × $NK_r$ matrix such that:

$$E_j = \left[0_{M \times (j-1)M}, I_{M \times M}, 0_{M \times (K_t - j)M}\right]$$

wherein $0_{M \times (j-1)M}$ represents an $M \times (j - 1)M$ sub-matrix containing only zeros, $0_{M \times (Kt-j)M}$ represents an $M \times (K_t - j)M$ sub-matrix containing only zeros, and $I_{M \times M}$ represents an $M \times M$ identity sub-matrix, and said $j$-th transmitter among said plurality of $K_t$ transmitters uses, in the expression of the figure of merit $g$, an estimation of $\{W^{(i,j)}\}_{i \in [1, Kt]}$ by relying on $\{W^{(i,j)}\}_{i \in [1, Kt]}$ and on the statistical distributions of the quantization errors $\eta^{(i,j')}$ and $\eta^{(i,j)}$.

Thus, the performance of the transmissions of data via the global MIMO channel $H$ is improved with respect to a mean square error criterion.

According to a particular feature, said $j$-th transmitter among said plurality of $K_t$ transmitters re-computes its adjusted own view $\tilde{V}^{(j)}$ of the overall precoder $V$ each time there is a change in the statistical distributions of the quantization errors $\eta^{(i,j')}$ and/or $\eta^{(i,j)}$.

Thus, the wireless communication system is reactive to changes in characteristics of the global MIMO channel $H$.

According to a particular feature, said $j$-th transmitter among said plurality of $K_t$ transmitters re-computes its adjusted own view $\tilde{V}^{(j)}$ of the overall precoder $V$ on a regular basis at an occurrence frequency that is defined by a time period during which the statistical distributions of the quantization errors $\eta^{(i,j')}$ and $\eta^{(i,j)}$ are considered to be stable.

Thus, reactivity of the wireless communication system with respect to potential changes in characteristics of the global MIMO channel $H$ is achieved in a simple manner.

The present invention also concerns a transmitter, referred to as $j$-th transmitter, among a plurality of $K_t$ transmitters of a wireless communication system which are configured for performing transmissions from the $K_t$ transmitters to a plurality of $K_r$ receivers via a global MIMO channel $H$ thanks to an overall precoder $V$ to be determined in a distributed fashion, said transmitters being interconnected by coordination links with limited data rate implying quantization operations. Said $j$-th transmitter comprises:

- means for determining an initial version $\tilde{V}^{(j)}$ of the overall precoder $V$ from its own view $\hat{H}^{(j)}$ of the global MIMO channel $H$;
- means for quantizing the determined initial version $\tilde{V}^{(j)}$ of the overall precoder $V$ for further transmissions to the other transmitters among the $K_t$ transmitters via the coordination links, thus implying quantization errors, and means for transmitting accordingly quantized versions of the initial version $\tilde{V}^{(j)}$ of the overall precoder $V$;
- means for receiving from each other $i$-th transmitter, via the respective coordination link $\ell_{i,j}$, a quantized version $W^{(i,j)}$ of an initial version of the overall precoder $V$ that said other transmitter has determined from its own view $\hat{H}^{(i)}$ of the global MIMO channel $H$, wherein $i$ from 1 to $K_t$, $i \neq j$,

- means for obtaining statistical distributions of the quantization errors incurred by the transmissions of the quantized versions of the initial versions of the overall precoder $V$ on the respective coordination links;

- means for optimizing a set of matrices parameters $A_i^{(j)}$ of a multivariate combination function $f$ combining the quantized versions $W^{(i,j)}$ of the initial versions of the overall precoder $V$ so as to obtain an adjusted own view $\tilde{V}^{(j)}$ of the overall precoder $V$, wherein $W^{(i,j)}$ is considered as equivalent to the determined initial version $\tilde{V}^{(j)}$ of the overall precoder $V$, and wherein the matrices parameters $A_i^{(j)}$ are optimized with respect to an estimation $g^{(j)}$ of a figure of merit $g$ representative of performance of the transmissions from the $K_t$ transmitters to the $K_r$ receivers, while considering said own view $\hat{H}^{(j)}$ of the global MIMO channel $H$ instead of the effective global MIMO channel $H$, further considering an estimation of the set of adjusted own views $\{\tilde{V}^{(j')}\}_{j' \in [1, Kt]}$ of the overall precoder $V$ instead of the effective adjusted precoders $\{\tilde{V}^{(j')}\}_{j' \in [1, Kt]}$ obtained by said other transmitters, further considering the following relationship:

$$\bar{W}^{(i,j')} = \bar{W}^{(i,j)} + \eta^{(i,j')} - \eta^{(i,j)}$$

wherein $\eta^{(i,j')}$ represents quantization errors on the coordination link $\ell_{i,j'}$, and respectively $\eta^{(i,j)}$ represents quantization errors on the coordination link $\ell_{i,j}$ wherein $j'$ from 1 to $K_t$, $j' \neq j$,
and further considering the obtained statistical distributions about the quantization errors instead of the effective quantization errors; and

- means for participating in said transmissions by applying a precoder that is formed by a part of the adjusted own view $\tilde{V}^{(j)}$ of the overall precoder $V$ which relates to said $j$-th transmitter among said plurality of $K_t$ transmitters.

The present invention also concerns a computer program that can be downloaded from a communications network and/or stored on a medium that can be read by a computer or processing device. This computer program comprises instructions for causing implementation of the aforementioned method, when said program is run by a processor. The present invention also concerns an information storage medium, storing a computer program comprising a set of instructions causing implementation of the aforementioned method, when the stored information is read from said information storage medium and run by a processor.

Since the features and advantages related to the communications system and to the computer program are identical to those already mentioned with regard to the corresponding aforementioned method, they are not repeated here.

The characteristics of the invention will emerge more clearly from a reading of the following description of an example of embodiment, said description being produced with reference to the accompanying drawings, among which:

Fig. 1 schematically represents a wireless communication system in which the present invention may be implemented;

Fig. 2 schematically represents an example of hardware architecture of a communication device, as used in the wireless communication system; and

Fig. 3 schematically represents an algorithm for determining, in a distributed fashion, precoders to be applied for transmitting data from a plurality of transmitters toward a plurality of receivers in the wireless communication system.

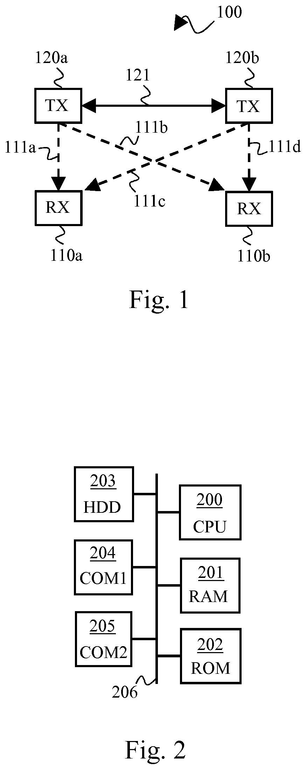

**Fig. 1** schematically represents a wireless communication system 100 in which the present invention may be implemented.

The wireless communication system 100 comprises a plurality of transmitters, two 120a, 120b of which being represented in Fig. 1. The wireless communication system 100 further comprises a plurality of receivers, two 110a, 110b of which being represented in Fig. 1. For instance, the transmitters 120a, 120b are access points or base stations of a wireless telecommunications network, and the receivers 110a, 110b are mobile terminals having access to the wireless telecommunications network via said access points or base stations. In typical use cases, the wireless communication system 100 comprises more transmitters and receivers.

The transmitters 120a, 120b cooperate with each other in order to improve performance when performing transmissions from the plurality of transmitters 120a, 120b toward the plurality of receivers 110a, 110b via wireless links 111a, 111b, 111c, 111d. The wireless link 111a represents the transmission channel from the transmitter 120a to the receiver 110a, the wireless link 111b represents the transmission channel from the transmitter 120a to the receiver 110b, the wireless link 111c represents the transmission channel from the transmitter 120b to the receiver 110a, and the wireless link 111d represents the transmission channel from the transmitter 120b to the receiver 110b. The transmitters 120a, 120b are interconnected, as shown by a coordination link 121 in Fig. 1A, so as to be able to exchange long-term statistics about transmission channel observations. The cooperation link 121 can be wired or wireless. When the wireless communication system 100 comprises more transmitters, said transmitters are interconnected by coordination links so that each transmitter is able to exchange data with any other transmitter, either directly or indirectly (via a relay device, which may be another transmitter among said plurality). Said cooperation link 121 has limited data rate, *i.e.* limited capacity, so that quantization operations are typically required for transmitting data over said cooperation link 121, and more especially for transmitting precoder related data in between the transmitters 120a, 120b. Long-term data can however be exchanged over the cooperation link 121 without requiring quantization operations (or by using quantization operations with very high granularity that does not impact quality of the information on said long-term data), as far as such long-term data are required to be processed by the transmitter to which said data are addressed within a laps of time that is greater than or equal to the maximum latency implied by the achievable data rate of said cooperation link 121. It means that said precoder related data are short-term data, which are required to be processed by the transmitter to which said data are addressed within a laps of time that is lower than the maximum latency implied by the achievable data rate of said cooperation link 121 (or part of the bandwidth of said cooperation link 121 which can be dedicated to transmitting said data), and which thus requires quantization operations so as to be received on time for processing by the transmitter to which said data are addressed.

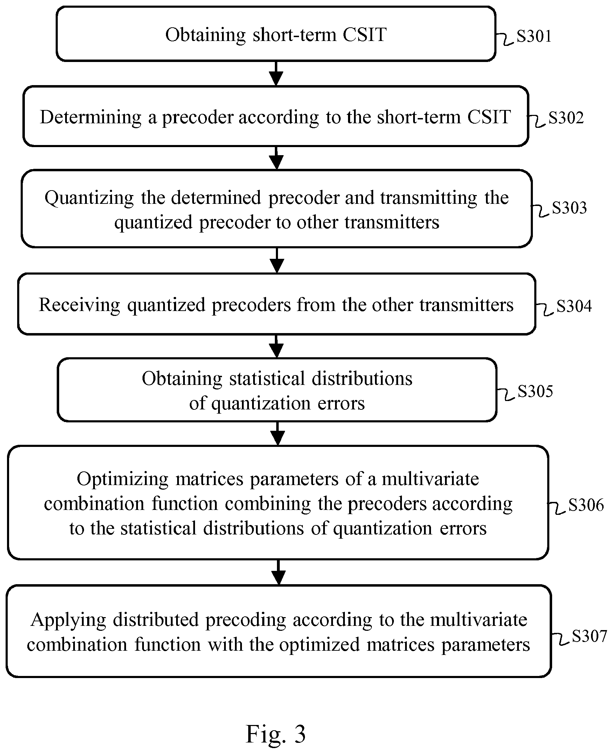

Cooperation is achieved by making the transmitters 120a, 120b apply respective precoders when performing said transmissions. Said precoders are determined in a distributed fashion within the wireless communication system 100 so that each transmitter determines the precoder that said transmitter has to apply in the scope of said transmissions. More particularly, each transmitter (identified by an index *j* among the plurality of transmitters) determines, independently from the other transmitters of said plurality, an initial own view $\hat{V}^{(j)}$ of an overall precoder *V* that should be cooperatively applied by said plurality of transmitters for performing said transmissions, and further perform optimization in order to adjust its initial own view $\hat{V}^{(j)}$ of the overall precoder *V*, from quantized precoder related data provided by the other transmitters of the wireless communication system 100 via the cooperation links, so as to obtain an adjusted own view $\tilde{V}^{(j)}$ of the overall precoder *V*. This aspect is detailed hereafter with respect to Fig. 3.

Herein the quantity of transmitters 120a, 120b in use is denoted $K_t$, each transmitter having a quantity *M* of transmit antennas, and the quantity of receivers 110a, 110b in use is denoted $K_r$, each receiver having a quantity *N* of receive antennas. The receivers 110a, 110b are configured to simultaneously receive signals from plural transmitters among the $K_t$ transmitters. A global MIMO channel *H* is thus created between the $K_t$ transmitters and the $K_r$ receivers. The part of the global MIMO channel *H* which links a *j*-th transmitter among the $K_t$ transmitters to a *k*-th receiver among the $K_r$ receivers is represented by an *N* x *M* matrix herein denoted $H_{j,k}$. One can note that $H_{j,k}$ is representative a MIMO channel too. The part of the global MIMO channel *H* that links the $K_t$ transmitters to the *k*-th receiver among the $K_r$ receivers is a concatenation of the $K_t$ MIMO channels $H_{j,k}$, with *j* = 1 to $K_t$, and is therefore an *N* x $MK_t$ matrix herein denoted $H_k$. One can further note that $H_k$ is representative of a MIMO channel too.

Let's consider a set of symbol vectors $s_k$. Each symbol vector $s_k$ of length *N* represents the data that has to be transmitted to the *k*-th receiver among the plurality of $K_r$ receivers, at a given instant. Let's further denote s the stacked vector $s = \begin{bmatrix} s_1^T, s_2^T, ..., s_{K_r}^T \end{bmatrix}^T$ that contains all data to be transmitted by the $K_t$ transmitters to the $K_r$ receivers at said given instant, wherein $A^T$ represents the transpose of a vector or matrix A.

Let's further consider the following overall precoder V:

$$V = \begin{bmatrix} V_1, ..., V_{K_r} \end{bmatrix}$$

and further define $E_j V$, with *j* = 1 to $K_t$, as the part of the overall precoder V to be ideally applied by the *j*-th transmitter among the $K_t$ transmitters, wherein $E_j$ is an $M \times NK_r$ matrix such that $E_j = [O_{M \times (j-1)M}, I_{M \times M}, O_{M \times (K_t-j)M}]$, and wherein $V_k$, with *k* = 1 to $K_r$ is the equivalent part of the overall precoder *V* which has to be ideally applied to reach the *k*-th receiver among the $K_r$ receivers.

It should be noted that $0_{M \times (j-1)M}$ in the expression of $E_j$ above represents an $M \times (j - 1)M$ sub-matrix of $E_j$ containing only zeros, $0_{M \times (Kt-j)M}$ represents an $M \times (K_t - j)M$ sub-matrix of $E_j$ containing only zeros, and $I_{M \times M}$ represents an $M \times M$ identity sub-matrix (could be an $M \times M$ identity matrix in other contexts herein).

In a joint processing CoMP (Coordinated Multipoint Transmission) approach, any and all transmitters know entirely the set of the symbol vectors $s_k$ to be transmitted toward the $K_r$ receivers at a given instant.

In a coordinated precoding approach where $K_t = K_r$, each transmitter among the $K_t$ transmitters communicates with one receiver among the $K_r$ receivers. It means that the *j*-th transmitter among the $K_t$ transmitters only has to know the symbol vector $s_k$ to be transmitted to the *k*-th receiver (with *k* = *j*) among the $K_r$ receivers with which said *j*-th transmitter communicates, which implies that the overall precoder *V* has a block-diagonal shape. In the case where any *j*-th transmitter among the $K_t$ transmitters has to communicate with the *k*-th receiver among the $K_r$ receivers in such a way that $k \neq j$, reordering of the $K_t$ transmitters with respect to the index *j* and/or of the $K_r$ receivers with respect to the index *k* is performed so as to make the overall precoder *V* have a block-diagonal shape.

Considering the statements here above, a model of the wireless communication system 100 can be expressed as follows:

$$y_k = H_k V s + n_k = H_k V_k s_k + \sum_{\ell=1, \ell \neq k}^{K_r} H_k V_\ell s_\ell + n_k$$

wherein:

- $y_k$ represents a symbol vector as received by the *k*-th receiver among the $K_r$ receivers when the symbol vector $s_k$ has been transmitted to said *k*-th receiver; and
- $n_k$ represents an additive noise incurred by said *k*-th receiver during the transmission of the symbol vector $s_k$.

It can be noticed that, in the formula above, the term $H_k V_k s_k$ represents the useful signal from the standpoint of the *k*-th receiver among the $K_r$ receivers and the sum of the terms $H_k V_\ell s_\ell$ represents interference incurred by the *k*-th receiver among the $K_r$ receivers during the transmission of the symbol vector $s_k$.

The $K_t$ transmitters are configured to obtain CSIT. CSIT is obtained by each transmitter among the $K_t$ transmitters from:

- feedback CSI (Channel State Information) from one or more receivers among the $K_r$ receivers, and/or
- channel estimation performed at said transmitter and using a channel reciprocity property, and/or
- from such CSI or such channel estimation provided by one or more other transmitters among the $K_t$ transmitters,

in such a way that CSI related data and/or channel estimation related data propagation rules within the wireless communication system 100 lead to CSIT errors and moreover to CSIT mismatch among the $K_t$ transmitters (*i.e.* different CSIT from the respective standpoints of the $K_t$ transmitters), for example due to quantization operations. One can note that, in addition to quantization operations, disparities in CSI related data effectively received by the $K_t$ transmitters imply that differences in CSIT exist from one transmitter to another among the $K_t$ transmitters, which leads to CSIT mismatch.

The global MIMO channel *H* can thus be expressed as follows, considering any *j*-th transmitter among the $K_t$ transmitters:

$$\widehat{H}^{(j)} = H + \Delta^{(j)}$$

wherein $\widehat{H}^{(j)}$ represents a view of the global MIMO channel *H* from the standpoint of the *j*-th transmitter among the $K_t$ transmitters, which is obtained by said *j*-th transmitter from the CSIT obtained by said *j*-th transmitter, and wherein $\Delta^{(j)}$ represents an estimate error between the effective global MIMO channel *H* and said view $\widehat{H}^{(j)}$ of the global MIMO channel *H* from the standpoint of said *j*-th transmitter.

In a similar manner, $\widehat{H}_{k,i}^{(j)}$ denotes herein the view of the MIMO channel $H_{k,i}$ from the standpoint of said *j*-th transmitter and $\widehat{H}_k^{(j)}$ denotes the view of the MIMO channel $H_k$ from the standpoint of said *j*-th transmitter.

CIST enables each transmitter to independently determine an initial own view $\widehat{V}^{(j)}$ of the overall precoder *V*, using known techniques. For example, the overall precoder *V* and thus said initial own view $\widehat{V}^{(j)}$ of the overall precoder *V*, are both of one precoder type among the followings:

- block-diagonalization precoders, for coordinated multi-point transmissions with joint processing, as addressed in the document "Cooperative Multi-Cell Block Diagonalization with Per-Base-Station Power Constraints", Rui Zhang, in IEEE Journal on Selected Areas in Communications, vol. 28, no. 9, pp. 1435-1445, December 2010;
- interference aware coordinated beamforming precoders, for coordinated multi-point transmissions with coordinated precoding, as addressed in the document "Interference Aware-Coordinated Beamforming in a Multi-Cell System", Chan-Byoung Chae et al, in IEEE Transactions on Wireless Communications, vol. 11, no. 10, pp. 3692-3703, October 2012; and

- regularized zero-forcing precoders, for coordinated multi-point transmissions with joint processing, as addressed in the document "A large system analysis of cooperative multicell downlink system with imperfect CSIT", Jun Zhang et al, in IEEE International Conference on Communications (ICC), pp.4813-4817, 10-15 June 2012.

Due to the CSIT mismatch, the initial own view $\hat{V}^{(j)}$ of the overall precoder $V$ is slightly different from one transmitter to another among the $K_t$ transmitters. Optimization is therefore adequately performed so as to improve the performance of the transmissions from the $K_t$ transmitters to the $K_r$ receivers, despite that each $j$-th transmitter among the $K_t$ transmitters independently determines the overall precoder $V$ part that said transmitter has to apply although CSIT mismatch exists, further despite that quantization operations are performed when the transmitters exchange precoder related data so as to enable them to independently adjust their respective own views $\hat{V}^{(j)}$ ($j$ = 1 to $K_t$) of the overall precoder $V$ in the scope of the optimization. As already mentioned, this aspect is detailed hereafter with regard to Fig. 3.

**Fig. 2** schematically represents an example of hardware architecture of a communication device, as used in the wireless communication system 100. The hardware architecture illustratively shown in Fig. 2 can represent each transmitter 120a, 120b of the wireless communication system 100 and/or each receiver 110a, 110b of the wireless communication system 100.

According to the shown architecture, the communication device comprises the following components interconnected by a communications bus 206: a processor, microprocessor, microcontroller or CPU (Central Processing Unit) 200; a RAM (Random-Access Memory) 201; a ROM (Read-Only Memory) 202; an SD (Secure Digital) card reader 203, or an HDD (Hard Disk Drive) or any other device adapted to read information stored on a storage medium; a first communication interface COM1 204 and potentially a second communication interface COM2 205.

When the communication device is one receiver among the $K_r$ receivers, the first communication interface COM1 204 enables the communication device to receive data from the $K_t$ transmitters via the global MIMO channel $H$. The second communication interface COM2 205 is not necessary in this case. The first communication interface COM1 204 further enables the communication device to feed back channel state information to one or more transmitter devices among the $K_t$ transmitters.

When the communication device is one transmitter among the $K_t$ transmitters, the first communication interface COM1 204 enables the communication device to transmit data to the $K_r$ receivers, via the global MIMO channel $H$, cooperatively with the other transmitters among the $K_t$ transmitters. The first communication interface COM1 204 further enables the communication device to receive channel state information fed back by one or more receivers among the $K_r$ receivers. Moreover, the second communication interface COM2 205 enables the communication device to exchange data with one or more other transmitters among the $K_t$ transmitters (cooperation links).

CPU 200 is capable of executing instructions loaded into RAM 201 from ROM 202 or from an external memory, such as an SD card. After the communication device has been powered on, CPU 200 is capable of reading instructions from RAM 201 and executing these instructions. The instructions form one computer program that causes CPU 200 to perform some or all of the steps of the algorithm described hereafter.

Any and all steps of the algorithms described hereafter may be implemented in software by execution of a set of instructions or program by a programmable computing machine, such as a PC (Personal Computer), a DSP (Digital Signal Processor) or a microcontroller; or else implemented in hardware by a machine or a dedicated component, such as an FPGA (Field-Programmable Gate Array) or an ASIC (Application-Specific Integrated Circuit).

**Fig. 3** schematically represents an algorithm for determining, in a distributed fashion within the wireless communication system 100, estimations of the overall precoder V to be applied for transmitting data from the plurality of $K_t$ transmitters 120a, 120b toward the plurality of $K_r$ receivers 110a, 110b. The algorithm shown in Fig. 3 is independently performed by each and every transmitter among the $K_t$ transmitters. Let's illustratively consider that the algorithm of Fig. 3 is performed by the transmitter 120a, which is considered as the $j$-th transmitter among the $K_t$ transmitters.

In a step S301, the transmitter 120a (which is considered as the $j$-th transmitter among the $K_t$ transmitters) obtains up-to-date (*i.e.* short-term) CSIT related data needed by the transmitter 120a to have its own view $\hat{H}^{(j)}$ of the global MIMO channel $H$.

In a step S302, the transmitter 120a determines its initial own view $\hat{V}^{(j)}$ of the precoder $V$ *from* its own view $\hat{H}^{(j)}$ of the global MIMO channel $H$, *i.e.* from the up-to-date CSIT related data obtained in the step S301. The transmitter 120a does so by using known techniques, as already explained. Since the transmitters 120a, 120b of the wireless communication system 100 rely on different CSIT, CSIT mismatch exists at this point. It means that the initial own view $\hat{V}^{(i)}$ of the overall precoder $V$ is determined by each $i$-th transmitter ($i$ from 1 to $K_t$) in the same manner, except that each *i-th* transmitter has relied on its own CSIT related data to do so.

In a step S303, the transmitter 120a quantizes its initial own view $\hat{V}^{(j)}$ of the overall precoder $V$ in order to be able to transmit quantized information representative of said initial own view $\hat{V}^{(j)}$ to the other transmitters among the $K_t$ transmitters. Considering that $\ell_{j,i}$ denotes the coordination link between the $j$-th transmitter and the $i$-th transmitter and that the coordination link $\ell_{j,i}$ is limited to a data rate $R_{j,i}$, quantization operations $Q_{j,i}$ based on a codebook having $2^{R_{j,i}}$ records are necessary to transmit said initial own view $\hat{V}^{(j)}$ of the overall precoder $V$ to said $i$-th transmitter. Since all the coordination links may have different capacities, the data rate $R_{j,i}$ and the codebook in use may differ from one coordination link $\ell_{j,i}$ to another. Considering that $W^{(j,i)}$ is the quantized version of said initial own view $\hat{V}^{(j)}$ to be transmitted on the coordination link $\ell_{j,i}$, the following relationship applies:

$$W^{(j,i)} = Q_{j,i}\left(\hat{V}^{(j)}\right) = \hat{V}^{(j)} + \eta^{(j,i)}$$

wherein $\eta^{(j,i)}$ represents quantization error when applying the quantization operations $Q_{j,i}$ onto said initial own view $\hat{V}^{(j)}$ of the overall precoder $V$.

Then the transmitter 120a transmits, to each $i$-th transmitter among the $K_t$ transmitters ($i \neq j$), the quantized version $W^{(j,i)}$ of said initial own view $\hat{V}^{(j)}$ of the overall precoder $V$, which has been determined by the transmitter 120a for the coordination link $\ell_{j,i}$ between transmitter 120a and said $i$-th transmitter. One should note that, by convention, $W^{(j,j)}$ is considered herein as equivalent to $\hat{V}^{(j)}$ (some kind of self-feedback with no quantization operations), which further means that $\eta^{(j,j)}$ is considered herein as being null.

In a step S304, the transmitter 120a receives, from each other $i$-th transmitter among the $K_t$ transmitters ($i \neq j$), a quantized version $W^{(i,j)}$ of the initial own view $\hat{V}^{(i)}$ that has been determined by said $i$-th transmitter, wherein said $i$-th transmitter has applied quantization operations $Q_{i,j}$ based on a codebook having $2^{R_{i,j}}$ records so as to obtain the quantized version $W^{(i,j)}$ from said initial own view $\hat{V}^{(i)}$ in order to meet the data rate $R_{i,j}$ of the coordination link $\ell_{i,j}$.

In a step S305, the transmitter 120a obtains statistical distributions of the quantization errors $\eta^{(i,j)}$ incurred by the transmissions of the quantized precoders $W^{(i,j)}$ ($i$ from 1 to $K_t$, $i \neq j$) on the respective coordination links $\ell_{i,j}$.

According to a first example, the transmitter 120a relies on predefined models respectively providing the statistical distributions of the quantization errors $\eta^{(i,j)}$.

According to a second example, the transmitters of the wireless communication system 100 cooperatively implement a learning phase so as to build the statistical distributions of the quantization errors $\eta^{(i,j)}$. Each $i$-th transmitter ($i$ from 1 to $K_t$) indeed knows the codebook in use to perform the quantization operations $Q_{i,j}$ ($j$ from 1 to $K_t$, $j \neq i$) and further knows over time what are the differences between said initial own views $\hat{V}^{(i)}$ that said $i$-th transmitter has obtained over time and the corresponding quantized versions $W^{(i,j)}$ that were effectively transmitted. From this knowledge, said $i$-th transmitter is able to compute the statistical distributions of the quantization errors $\eta^{(i,j)}$ and then to share the computed statistical distribution of each quantization error $\eta^{(i,j)}$ with the other transmitters of the wireless communication system 100, which can be done on a long-term basis by exchanges between the transmitters themselves or on a long-term basis via a central device that gathers such knowledge and then propagates the statistical distributions of the quantization errors $\eta^{(i,j)}$ to said transmitters.

The statistical distributions of the quantization errors $\eta^{(i,j)}$ depend inexplicitly on statistical distributions of the CSIT errors $\Delta^{(i)}$ between the effective global MIMO channel $H$ and the own view $\hat{H}^{(i)}$ of the global MIMO channel $H$ from the standpoint of each $i$-th transmitter among the $K_t$ transmitters. Knowing how to obtain the initial own views $\hat{V}^{(i)}$ of the overall precoder $V$ thanks to the codebooks for performing the quantization operations $Q_{i,j}$, the statistical distributions of the quantization errors $\eta^{(i,j)}$ can be refined according to statistical distributions of the CSIT errors $\Delta^{(i)}$. The statistical distribution of the CSIT error $\Delta^{(i)}$ is for instance obtained from a predefined model.

The statistical distributions of the quantization errors $\eta^{(i,j)}$ may be represented as histograms representative of probability density functions, or parameterized functions representative of the probability density functions, wherein corresponding parameters thereof only may be exchanged (*e.g.* mean and variance in the Gaussian case).

In a step S306, the transmitter 120a (considered as the $j$-th transmitter among the $K_t$ transmitters) optimizes a set of matrices parameters $\bar{A}_i^{(j)}$ ($i$ from 1 to $K_t$) of a multivariate combination function $f$ combining the quantized versions $W^{(i,j)}$ of the overall precoder $V$. The matrices parameter $\bar{A}_i^{(j)}$ are associated with the respective quantized versions $W^{(i,j)}$, in such a way that the multivariate combination function $f$ can be expressed in one of the following forms:

$$f_{\left\{A_i^{(j)}\right\}_{i\in[1,K_t]}}\left(\left\{W^{(i,j)}\right\}_{i\in[1,K_t]}\right) = \sum_{i=1}^{K_t}\left(A_i^{(j)} W^{(i,j)}\right)$$

$$f_{\left\{A_i^{(j)}\right\}_{i\in[1,K_t]}}\left(\left\{W^{(i,j)}\right\}_{i\in[1,K_t]}\right) = \sum_{i=1}^{K_t}\left(W^{(i,j)} A_i^{(j)}\right)$$

$$f_{\left\{A_i^{(j)}\right\}_{i\in[1,K_t]}}\left(\left\{W^{(i,j)}\right\}_{i\in[1,K_t]}\right) = \sum_{i=1}^{K_t}\left(W^{(i,j)} + A_i^{(j)}\right)$$

$$f_{\left\{A_i^{(j)}\right\}_{i\in[1,K_t]}}\left(\left\{W^{(i,j)}\right\}_{i\in[1,K_t]}\right) = \sum_{i=1}^{K_t}\left(\left(W^{(i,j)}\right)^{-1} + \left(A_i^{(j)}\right)^{-1}\right)^{-1}$$

The multivariate combination function *f* thus enables the transmitter 120a (considered as the *j*-th transmitter among the $K_t$ transmitters) to determine its adjusted own view $\tilde{V}^{(j)}$ of the overall precoder *V* from the quantized versions $W^{(i,j)}$ (*i* from 1 to $K_t$, $i \ne j$) received from the other transmitters of the wireless communication system 100, from its initial own view $\hat{V}^{(j)}$ of the overall precoder V and from the optimized matrices parameter $A_i^{(j)}$:

$$\tilde{V}^{(j)} = f_{\left\{A_i^{(j)}\right\}_{i\in[1,K_t]}}\left(\left\{W^{(i,j)}\right\}_{i\in[1,K_t]}\right)$$

The set of matrices parameters $A_i^{(j)}$ are optimized with respect to an estimation $g^{(j)}$ of a figure of merit *g* (also referred to as *utility function*) representative of the performance of the transmissions from the $K_t$ transmitters to the $K_r$ receivers, while considering the view $\hat{H}^{(j)}$ of the global MIMO channel *H* from the standpoint of the transmitter 120a (considered as the *j*-th transmitter among the $K_t$ transmitters) instead of the effective global MIMO channel *H*, further considering an estimation of the set of adjusted precoders $\{\tilde{V}^{(j')}\}_{j'\in[1,K_t]}$ instead of the effective adjusted precoders $\{\tilde{V}^{(j')}\}_{j'\in[1,K_t]}$ and further considering the following relationship:

$$W^{(i,j')} = W^{(i,j)} + \eta^{(i,j')} - \eta^{(i,j)}$$

The figure of merit $g^{(j)}$ is thus defined as an estimation of the figure of merit *g* with respect to the statistical distribution of the quantization error $\eta^{(i,j)}$, as follows:

$$g^{(j)}\left(\hat{H}^{(j)}, \left\{W^{(i,j)}\right\}_{i\in[1,K_t]}\right)$$
$$= E_{\left\{\eta^{(i,j')}, i\in[1,K_t], j'\in[1,K_t]\right\}}\left[g\left(\hat{H}^{(j)}, f_{\left\{A_j^{(i)}\right\}_{i\in[1,K_t]}}\left(\left\{W^{(i,j)}\right\}_{i\in[1,K_t]} + \eta^{(i,j')} - \eta^{(i,j)}\right)\right)\right]$$

wherein $E_{\{\eta^{(i,j')}, i\in[1,K_t], j'\in[1,K_t]\}}$ represents the mathematical expectation over the statistical distribution of the quantization error $\eta^{(i,j)}$.

In a particular embodiment, the figure of merit *g* is related to the sum rate as follows:

$$g\left(H, \left\{\tilde{V}^{(j')}\right\}_{j'\in[1,K_t]}\right) = \log_2 \det\left|I + H\begin{bmatrix} E_1\tilde{V}^{(1)} \\ \vdots \\ E_{K_t}\tilde{V}^{(K_t)} \end{bmatrix}\begin{bmatrix} E_1\tilde{V}^{(1)} \\ \vdots \\ E_{K_t}\tilde{V}^{(K_t)} \end{bmatrix}^{\dagger} H^{\dagger}\right|$$

wherein *I* is an identity matrix.

In another particular embodiment, the figure of merit $g$ is related to the sum of mean square error (MSE) as follows:

$$g\left(H, \{\tilde{V}^{(j')}\}_{j'\in[1,K_t]}\right) = \sum_{k=1}^{K_r} Trace\left(I + B_k^{\dagger} H_k^{\dagger}\left(I + \sum_{\ell \neq k}^{K_r} H_k B_\ell B_\ell^{\dagger} H_k^{\dagger}\right) H_k B_k\right)$$

wherein

$$B_k = \begin{bmatrix} E_1 \tilde{V}^{(1)} \\ \vdots \\ E_{K_t} \tilde{V}^{(K_t)} \end{bmatrix} e_k$$

with

$$e_k = \left[0_{N\times(k-1)N}, I_{N\times N}, 0_{N\times(K_r-k)N}\right]^T$$

So as to compute the estimation $g^{(j)}$, since the transmitter 120a does not know the effective global MIMO channel $H$ but has only its own view $\hat{H}^{(j)}$ of the global MIMO channel $H$, the transmitter 120a replaces, in the expression of the figure of merit $g$, the global MIMO channel $H$ by its own view $\hat{H}^{(j)}$ of the global MIMO channel $H$. Moreover, since the transmitter 120a does not know the quantized precoders $\{W^{(i,j')}\}_{i\in[1,K_t]}$ with $j'$ from 1 to $K_t$ and $j' \neq j$, the transmitter 120a uses an estimation of $\{W^{(i,j')}\}_{i\in[1,K_t]}$ by relying on $\{W^{(i,j)}\}_{i\in[1,K_t]}$ and on the statistical distribution of the quantization error $\eta^{(i,j')}$ and $\eta^{(i,j)}$.

Although the own view $\hat{H}^{(j)}$ of the global MIMO channel $H$ has been built by the transmitter 120a (considered as the $j$-th transmitter among the $K_t$ transmitters) on CSIT containing errors, the effect of not taking into account said errors is typically insignificant regarding the mismatch between the overall precoder $V$ (as would ideally be applied) and the adjusted own view $\tilde{V}^{(j)}$ of the overall precoder $V$.

In a particular embodiment where the adjusted own view $\tilde{V}^{(j)}$ of the overall precoder $V$ is improved regarding the CSIT mismatch, the estimation $g^{(j)}$ of the figure of merit $g$ becomes a mathematical expectation, over the distribution of the CSIT error $\Delta^{(j)}$ between the global MIMO channel $H$ and the own view $\hat{H}^{(j)}$ of the global MIMO channel $H$ from the standpoint of the $j$-th transmitter, of the above expressions of the figure of merit g, wherein the transmitter 120a replaces, in the expression of the figure of merit $g$, the global MIMO channel $H$ by its own view $\hat{H}^{(j)}$ of the global MIMO channel $H$ plus the CSIT error $\Delta^{(j)}$ (*i.e.* replacing $H$ by $\hat{H}^{(j)} - \Delta^{(j)}$). The statistical distribution of the CSIT error $\Delta^{(j)}$ is for instance obtained from a predefined model.

Optimization of the matrices parameters $\left\{A_i^{(j)}\right\}_{i\in[1,K_t]}$ can be performed by the transmitter 120a (considered as the $j$-th transmitter among the $K_t$ transmitters) in various ways known to the one with ordinary skills in the art. According to a first example, the transmitter 120a tests values contained in a predefined library of matrices parameters $\left\{A_i^{(j)}\right\}_{i\in[1,K_t]}$, and retains the values providing the best performance according to the estimation $g^{(j)}$ of the figure of merit g. According to a second example, the transmitter 120a optimizes the matrices parameters $\left\{A_i^{(j)}\right\}_{i\in[1,K_t]}$ using a Monte-Carlo simulation.

In a step S307, the transmitter 120a applies its own part of the distributed precoding according to the multivariate combination function $f$ combining the quantized versions $W^{(i,j)}$ of the overall precoder $V$ (wherein $j$ represents the transmitter 120a and with $i$ from 1 to $K_t$). In other words, the transmitter 120a applies a precoding defined by $E_j^T \tilde{V}^{(j)}$ when performing transmissions within the wireless communication system 100 so as to participate in said transmissions jointly with the other transmitters.

The algorithm of Fig. 3 is preferably applied by each transmitter of the wireless communication system 100 each time there is a change in the statistical distribution of the quantization error $\eta^{(i,j)}$, whatever is coordination link $\ell_{i,j}$ concerned (a change for any coordination link). In another embodiment, the algorithm of Fig. 3 is applied by each transmitter of the wireless communication system 100 on a regular basis at an occurrence frequency that is defined by a time period during which the statistical distribution of the quantization error $\eta^{(i,j)}$, whatever is coordination link $\ell_{i,j}$ concerned, is considered to remain stable (stable for any coordination link).

**Claims**

1. A method implemented by one transmitter, referred to as *j*-th transmitter, among a plurality of $K_t$ transmitters of a wireless communication system for performing transmissions from the $K_t$ transmitters to a plurality of $K_r$ receivers via a global MIMO channel *H* thanks to an overall precoder *V* to be determined in a distributed fashion, said transmitters being interconnected by coordination links with limited data rate implying quantization operations, wherein said *j*-th transmitter performs:

   - determining (S302) an initial version $\tilde{V}^{(j)}$ of the overall precoder *V* from its own view $\hat{H}^{(j)}$ of the global MIMO channel *H*;
   - quantizing (S303) the determined initial version $\tilde{V}^{(j)}$ of the overall precoder *V* for further transmissions to the other transmitters among the $K_t$ transmitters via the coordination links, thus implying quantization errors, and transmitting accordingly quantized versions of the initial version $\tilde{V}^{(j)}$ of the overall precoder *V;*
   - receiving (S304) from each other *i*-th transmitter among the plurality of $K_t$ transmitters, via the respective coordination link $\ell_{i,j}$, a quantized version $W^{(i,j)}$ of an initial version of the overall precoder *V* that said other transmitter has determined from its own view $\hat{H}^{(i)}$ of the global MIMO channel *H,* wherein *i* from 1 to $K_t$, $i \neq j$,
   - obtaining (S305) statistical distributions of the quantization errors incurred by the transmissions of the quantized versions of the initial versions of the overall precoder *V* on the respective coordination links;
   - optimizing (S306) a set of matrices parameters $A_i^{(j)}$ of a multivariate combination function *f* combining the quantized versions $W^{(i,j)}$ of the initial versions of the overall precoder *V* so as to obtain an adjusted own view $\tilde{V}^{(j)}$ of the overall precoder *V*, wherein $W^{(j,j)}$ is considered as equivalent to the determined initial version $\tilde{V}^{(j)}$ of the overall precoder *V,* and wherein the matrices parameters $A_i^{(j)}$ are optimized with respect to an estimation $g^{(j)}$ of a figure of merit *g* representative of performance of the transmissions from the $K_t$ transmitters to the $K_r$ receivers, while considering said own view $\hat{H}^{(j)}$ of the global MIMO channel *H* instead of the effective global MIMO channel *H*, further considering an estimation of the set of adjusted own views $\{\tilde{V}^{(j')}\}_{j' \in [1,K_t]}$ of the overall precoder *V* instead of the effective adjusted precoders $\{\tilde{V}^{(j')}\}_{j' \in [1,K_t]}$ obtained by said other transmitters, further considering the following relationship:

$$W^{(i,j')} = W^{(i,j)} + \eta^{(i,j')} - \eta^{(i,j)}$$

   wherein $\eta^{(i,j')}$ represents quantization errors on the coordination link $\ell_{i,j'}$ and respectively $\eta^{(i,j)}$ represents quantization errors on the coordination link $\ell_{i,j}$, wherein *j'* from 1 to $K_t$, $j' \neq j$,
   and further considering the obtained statistical distributions of the quantization errors instead of the effective quantization errors; and

   - participating in the transmissions by applying a precoder that is formed by a part of the adjusted own view $\tilde{V}^{(j)}$ of the overall precoder *V* which relates to said *j*-th transmitter among said plurality of $K_t$ transmitters.

2. The method according to claim 1, wherein the multivariate combination function *f* is defined in one of the following forms:

$$f_{\{A_i^{(j)}\}_{i \in [1,K_t]}}\left(\{W^{(i,j)}\}_{i \in [1,K_t]}\right) = \sum_{\substack{i=1 \\ K_t}}^{K_t}\left(A_i^{(j)} W^{(i,j)}\right)$$

$$f\left\{A_i^{(j)}\right\}_{i\in[1,K_t]}\left(\left\{W^{(i,j)}\right\}_{i\in[1,K_t]}\right) = \sum_{i=1}^{K_t}\left(W^{(i,j)}A_i^{(j)}\right)$$

$$f\left\{A_i^{(j)}\right\}_{i\in[1,K_t]}\left(\left\{W^{(i,j)}\right\}_{i\in[1,K_t]}\right) = \sum_{i=1}^{K_t}\left(W^{(i,j)} + A_i^{(j)}\right)$$

$$f\left\{A_i^{(j)}\right\}_{i\in[1,K_t]}\left(\left\{W^{(i,j)}\right\}_{i\in[1,K_t]}\right) = \sum_{i=1}^{K_t}\left((W^{(i,j)})^{-1} + \left(A_i^{(j)}\right)^{-1}\right)$$

3.  The method according to any one of claims 1 and 2, wherein the figure of merit $g$ is defined as follows:

$$g\left(H,\left\{\tilde{V}^{(j')}\right\}_{j'\in[1,K_t]}\right) = \log_2 \det\left|I + H\begin{bmatrix}E_1\tilde{V}^{(1)}\\ \vdots\\ E_{K_t}\tilde{V}^{(K_t)}\end{bmatrix}\begin{bmatrix}E_1\tilde{V}^{(1)}\\ \vdots\\ E_{K_t}\tilde{V}^{(K_t)}\end{bmatrix}^\dagger H^\dagger\right|$$

wherein $I$ is an identity matrix, and wherein $E_j$ is an $M \times NK_r$ matrix such that:

$$E_j = \begin{bmatrix}0_{M\times(j-1)M}, I_{M\times M}, 0_{M\times(K_t-j)M}\end{bmatrix}$$

wherein $0_{M\times(j-1)M}$ represents an $M \times (j - 1)M$ sub-matrix containing only zeros, $0_{M\times(Kt-j)M}$ represents an $M \times (K_t - j)M$ sub-matrix containing only zeros, and $I_{M\times M}$ represents an $M \times M$ identity sub-matrix,
and said $j$-th transmitter among said plurality of $K_t$ transmitters uses, in the expression of the figure of merit $g$, an estimation of $\{W^{(i,j)}\}_{i\in[1,K_t]}$ by relying on $\{W^{(i,j)}\}_{i\in[1,K_t]}$ and on the statistical distributions of the quantization errors $\eta^{(i,j')}$ and $\eta^{(i,j)}$.

4.  The method according to any one of claims 1 and 2, wherein the figure of merit $g$ is defined as follows:

$$g\left(H,\left\{\tilde{V}^{(j')}\right\}_{j'\in[1,K_t]}\right) = \sum_{k=1}^{K_r} Trace\left(I + B_k^\dagger H_k^\dagger\left(I + \sum_{\ell\neq k}^{K_r} H_k B_\ell B_\ell^\dagger H_k^\dagger\right)H_k B_k\right)$$

wherein

$$B_k = \begin{bmatrix}E_1\tilde{V}^{(1)}\\ \vdots\\ E_{K_t}\tilde{V}^{(K_t)}\end{bmatrix}e_k$$

with

$$e_k = \begin{bmatrix}0_{N\times(k-1)N}, I_{N\times N}, 0_{N\times(K_r-k)N}\end{bmatrix}^T$$

and wherein $E_j$ is an M $\times NK_r$ matrix such that:

$$E_j = \left[ 0_{M \times (j-1)M} \, , I_{M \times M} \, , 0_{M \times (K_t - j)M} \right]$$

wherein $0_{M \times (j-1)M}$ represents an $M \times (j - 1)M$ sub-matrix containing only zeros, $0_{M \times (K_t - j)M}$ represents an $M \times (K_t - j)M$ sub-matrix containing only zeros, and $I_{M \times M}$ represents an $M \times M$ identity sub-matrix, and said $j$-th transmitter among said plurality of $K_t$ transmitters uses, in the expression of the figure of merit $g$, an estimation of $\{W^{(i,j')}\}_{i \in [1, K_t]}$ by relying on $\{W^{(i,j)}\}_{i \in [1, K_t]}$ and on the statistical distributions of the quantization errors $\eta^{(i,j')}$ and $\eta^{(i,j)}$.

5. The method according to any one of claims 1 to 4, wherein said $j$-th transmitter among said plurality of $K_t$ transmitters re-computes its adjusted own view $\tilde{V}^{(j)}$ of the overall precoder $V$ each time there is a change in the statistical distributions of the quantization errors $\eta^{(i,j')}$ and/or $\eta^{(i,j)}$.

6. The method according to any one of claims 1 to 4, wherein said $j$-th transmitter among said plurality of $K_t$ transmitters re-computes its adjusted own view $\tilde{V}^{(j)}$ of the overall precoder $V$ on a regular basis at an occurrence frequency that is defined by a time period during which the statistical distributions of the quantization errors $\eta^{(i,j')}$ and $\eta^{(i,j)}$ are considered to be stable.

7. A computer program, configured to comprise program code instructions which can be loaded in a programmable device for implementing the method according to any one of claims 1 to 6, when the program code instructions are run by the programmable device.

8. An information storage medium, configured to store a computer program comprising program code instructions which can be loaded in a programmable device for implementing the method according to any one of claims 1 to 6, when the program code instructions are run by the programmable device.

9. A transmitter, referred to as $j$-th transmitter, among a plurality of $K_t$ transmitters of a wireless communication system which are configured for performing transmissions from the $K_t$ transmitters to a plurality of $K_r$ receivers via a global MIMO channel $H$ thanks to an overall precoder $V$ to be determined in a distributed fashion, said transmitters being interconnected by coordination links with limited data rate implying quantization operations, wherein said $j$-th transmitter comprises:

- means for determining (S302) an initial version $\tilde{V}^{(j)}$ of the overall precoder V from its own view $\hat{H}^{(j)}$ of the global MIMO channel $H$;
- means for quantizing (S303) the determined initial version $\tilde{V}^{(j)}$ of the overall precoder $V$ for further transmissions to the other transmitters among the $K_t$ transmitters via the coordination links, thus implying quantization errors, and means for transmitting accordingly quantized versions of the initial version $\hat{V}^{(j)}$ of the overall precoder $V$;
- means for receiving (S304) from each other $i$-th transmitter, via the respective coordination link $\ell_{i,j}$, a quantized version $W^{(i,j)}$ of an initial version of the overall precoder $V$ that said other transmitter has determined from its own view $\hat{H}^{(i)}$ of the global MIMO channel $H$, wherein $i$ from 1 to $K_t$, $i \neq j$,
- means for obtaining (S305) statistical distributions of the quantization errors incurred by the transmissions of the quantized versions of the initial versions of the overall precoder $V$ on the respective coordination links;
- means for optimizing (S306) a set of matrices parameters $A_i^{(j)}$ of a multivariate combination function $f$ combining the quantized versions $W^{(i,j)}$ of the initial versions of the overall precoder $V$ so as to obtain an adjusted own view $\tilde{V}^{(j)}$ of the overall precoder $V$, wherein $W^{(i,j)}$ is considered as equivalent to the determined initial version $\tilde{V}^{(j)}$ of the overall precoder $V$, and wherein the matrices parameters $A_i^{(j)}$ are optimized with respect to an estimation $g^{(j)}$ of a figure of merit $g$ representative of performance of the transmissions from the $K_t$ transmitters to the $K_r$ receivers, while considering said own view $\hat{H}^{(j)}$ of the global MIMO channel $H$ instead of the effective global MIMO channel $H$, further considering an estimation of the set of adjusted own views $\{\tilde{V}^{(j')}\}_{j' \in [1, K_t]}$ of the overall precoder $V$ instead of the effective adjusted precoders $\{\tilde{V}^{(j')}\}_{j' \in [1, K_t]}$ obtained by said other transmitters, further considering the following relationship:

$$W^{(i,j')} = W^{(i,j)} + \eta^{(i,j')} - \eta^{(i,j)}$$

wherein $\eta^{(i,j')}$ represents quantization errors on the coordination link $\ell_{i,j'}$, and respectively $\eta^{(i,j)}$ represents quantization errors on the coordination link $\ell_{i,j}$ wherein $j'$ from 1 to $K_t$, $j' \neq j$, and further considering the obtained statistical distributions of the quantization errors instead of the effective quantization errors; and

- means for participating in said transmissions (S307) by applying a precoder that is formed by a part of the adjusted own view $\tilde{V}^{(j)}$ of the overall precoder $V$ which relates to said $j$-th transmitter among said plurality of $K_t$ transmitters.

## Patentansprüche

1. Verfahren, implementiert durch einen Sender, auf den als $j$-ter Sender unter einer Vielzahl von $Kt$ Sendern eines drahtlosen Kommunikationssystems Bezug genommen wird, zum Durchführen von Sendungen von den $Kt$ Sendern zu einer Vielzahl von $K_r$ Empfängern über einen globalen MIMO-Kanal $H$ dank eines auf verteilte Art und Weise zu bestimmenden insgesamten Vorcodierers $V$, wobei die Sender durch Koordinationsverbindungen mit eine begrenzte Datenrate implizierenden Quantisierungsoperationen miteinander verbunden sind, wobei der $j$-te Sender folgendes durchführt:

   - Bestimmen (S302) einer Anfangsversion $\tilde{V}^{(j)}$ des insgesamten Vorcodierers $V$ aus seiner eigenen Sicht $\hat{H}^{(j)}$ des globalen MIMO-Kanals $H$;
   - Quantisieren (S303) der bestimmten Anfangsversion $\tilde{V}^{(j)}$ des insgesamten Vorcodierers $V$ für weitere Sendungen zu den anderen Sendern unter den $K_t$ Sendern über die Koordinationsverbindungen, wodurch Quantisierungsfehler impliziert werden, und Senden entsprechend quantisierte Versionen der Anfangsversion $\tilde{V}^{(j)}$ des insgesamten Vorcodierers $V$;
   - Empfangen (S304), von jedem anderen $i$-ten Sender unter der Vielzahl von $Kt$ Sendern über die jeweilige Koordinationsverbindung $\ell_{i,j}$, einer quantisierten Version $W^{(i,j)}$ einer Anfangsversion des insgesamten Vorcodierers $V$, die der andere Sender aus seiner eigenen Sicht $\hat{H}^{(j)}$ des globalen MIMO-Kanals $H$ bestimmt hat, wobei $i$ von 1 bis $K_t$, $i \neq j$, gilt,
   - Erhalten (S305) statistischer Verteilungen der durch die Sendungen der quantisierten Versionen der Anfangsversion des insgesamten Vorcodierers $V$ zugezogenen Quantisierungsfehler auf den jeweiligen Koordinationsverbindungen;

   - Optimieren (S306) einer Gruppe von Matrizenparametern $A_i^{(j)}$ einer multivariaten Kombinationsfunktion $f$, die die quantisierten Versionen $W^{(i,j)}$ der Anfangsversionen des insgesamten Vorcodierers $V$ kombiniert, um eine eingestellte eigene Sicht $\tilde{V}^{(j)}$ des insgesamten Vorcodierers $V$ zu erhalten, wobei $W^{(i,j)}$ als Äquivalent zu der bestimmten Anfangsversion $\tilde{V}^{(j)}$ des insgesamten Vorcodierers $V$ angesehen wird und wobei die Matrizenparameter $A_i^{(j)}$ in Bezug auf eine Schätzung $g^{(j)}$ eines Bewertungsfaktors $g$ optimiert sind, der eine Leistungsfähigkeit der Sendungen von den $K_t$ Sendern zu den $K_r$ Empfängern darstellt, während die eigene Sicht $\hat{H}^{(j)}$ des globalen MIMO-Kanals $H$ anstelle des effektiven globalen MIMO-Kanals $H$ berücksichtigt wird, unter weiterer Berücksichtigung einer Schätzung der Gruppe von eingestellten eigenen Sichten $\{\tilde{V}^{(j')}\}_{j' \in [1,K_t]}$ des insgesamten Vorcodierers $V$ anstelle der durch die anderen Sender erhaltenen effektiven eingestellten Vorcodierer $\{\tilde{V}^{(j')}\}_{j' \in [1,K_t]}$, unter weiterer Berücksichtigung der folgenden Beziehung:

$$W^{(i,j')} = W^{(i,j)} + \eta^{(i,j')} - \eta^{(i,j)}$$

   wobei $\eta^{(i,j')}$ Quantisierungsfehler auf der Koordinationsverbindung $\ell_{i,j'}$ darstellt und $\eta^{(i,j)}$ jeweils Quantisierungsfehler auf der Koordinationsverbindung $\ell_{i,j}$ darstellt, wobei j' von 1 bis $K_t$, $j' \neq j$, gilt, und unter weiterer Berücksichtigung der erhaltenen statistischen Verteilungen der Quantisierungsfehler anstelle der effektiven Quantisierungsfehler; und

   - Teilnehmen an den Sendungen durch Anwenden eines Vorcodierers, der durch einen Teil der eingestellten eigenen Sicht $\tilde{V}^{(j)}$ des insgesamten Vorcodierers V ausgebildet ist, der sich auf den $j$-ten Sender unter der Vielzahl von $K_t$ Sendern bezieht.

**2.** Verfahren nach Anspruch 1, wobei die multivariate Kombinationsfunktion *f* in einer der folgenden Formen definiert ist:

$$f_{\left\{A_i^{(j)}\right\}_{i\in[1,K_t]}}\left(\left\{W^{(i,j)}\right\}_{i\in[1,K_t]}\right) = \sum_{i=1}^{K_t}\left(A_i^{(j)}W^{(i,j)}\right)$$

$$f_{\left\{A_i^{(j)}\right\}_{i\in[1,K_t]}}\left(\left\{W^{(i,j)}\right\}_{i\in[1,K_t]}\right) = \sum_{i=1}^{K_t}\left(W^{(i,j)}A_i^{(j)}\right)$$

$$f_{\left\{A_i^{(j)}\right\}_{i\in[1,K_t]}}\left(\left\{W^{(i,j)}\right\}_{i\in[1,K_t]}\right) = \sum_{i=1}^{K_t}\left(W^{(i,j)} + A_i^{(j)}\right)$$

$$f_{\left\{A_i^{(j)}\right\}_{i\in[1,K_t]}}\left(\left\{W^{(i,j)}\right\}_{i\in[1,K_t]}\right) = \sum_{i=1}^{K_t}\left(\left(W^{(i,j)}\right)^{-1} + \left(A_i^{(j)}\right)^{-1}\right)^{-1}$$

**3.** Verfahren nach einem der Ansprüche 1 und 2, wobei der Bewertungsfaktor g wie folgt definiert ist:

$$g\left(H,\left\{\tilde{V}^{(j')}\right\}_{j'\in[1,K_t]}\right) = log_2 det\left|I + H\begin{bmatrix}E_1\tilde{V}^{(1)}\\\vdots\\E_{K_t}\tilde{V}^{(K_t)}\end{bmatrix}\begin{bmatrix}E_1\tilde{V}^{(1)}\\\vdots\\E_{K_t}\tilde{V}^{(K_t)}\end{bmatrix}^{\dagger}H^{\dagger}\right|$$

wobei *I* eine Einheitsmatrix ist und wobei $E_j$ eine *M x $NK_r$* - Matrix ist, so dass folgendes gilt:

$$E_j = \left[O_{Mx(j-1)M}, I_{MxM}, O_{Mx(K_t-j)M}\right]$$

wobei $O_{Mx(j-1)M}$ eine *M x (j - 1) M* - Untermatrix darstellt, die nur Nullen enthält, $O_{Mx(K_t-j)M}$ eine *M x ($K_t$ - j)M* - Untermatrix darstellt, die nur Nullen enthält, und $I_{MxM}$ eine *M x M* - Einheitsuntermatrix darstellt, und der *j*-te Sender unter der Vielzahl von $K_t$ Sendern in dem Ausdruck des Bewertungsfaktors g eine Schätzung von $\{W^{(i,j)}\}_{i\in[1,K_t]}$ durch Beruhen auf $\{W^{(i,j)}\}_{i\in[1,K_t]}$ und auf den statistischen Verteilungen der Quantisierungsfehler $\eta^{(i,j)}$ und $\eta^{(i,j)}$ verwendet.

**4.** Verfahren nach einem der Ansprüche 1 und 2, wobei der Bewertungsfaktor g wie folgt definiert ist:

$$g\left(H,\left\{\tilde{V}^{(j')}\right\}_{j'\in 1,K_t}\right) = \sum_{k=1}^{K_r} Trace\left(I + B_k^{\dagger}H_k^{\dagger}\left(I + \sum_{\ell\neq k}^{K_r}H_\ell B_\ell B_\ell^{\dagger}H_k^{\dagger}\right)H_k B_k\right)$$

wobei folgendes gilt:

$$B_k = \begin{bmatrix} E_1 \tilde{V}^{(1)} \\ \vdots \\ E_{K_t} \tilde{V}^{(K_t)} \end{bmatrix} e_k$$

mit

$$e_k = \left[ O_{Nx(k-1)N}, I_{NxN}, O_{Nx(K_r-k)N} \right]^T$$

und wobei $E_j$ eine $M \times NK_r$ - Matrix ist, so dass gilt:

$$E_j = \left[ O_{Mx(j-1)M}, I_{MxM}, O_{Mx(K_t-j)M} \right]$$

wobei $O_{mx(j-1)M}$ eine $M \times (j-1)M$ - Untermatrix darstellt, die nur Nullen enthält, $O_{Mx(K_t-j)M}$ eine $M \times (K_t - j)M$ - Untermatrix darstellt, die nur Nullen enthält, und $I_{MxM}$ eine $M \times M$ - Einheitsuntermatrix darstellt, und der $j$-te Sender unter der Vielzahl von $K_t$ Sendern in dem Ausdruck des Bewertungsfaktors g eine Schätzung von $\{W^{(i,j')}\}_{i \in [1,K_t]}$ durch Beruhen auf $\{W^{(i,j)}\}_{i \in [1,K_t]}$ und auf den statistischen Verteilungen der Quantisierungsfehler $\eta^{(i,j')}$ und $\eta^{(i,j)}$ verwendet.

5. Verfahren nach einem der Ansprüche 1 bis 4, wobei der $j$-te Sender unter der Vielzahl von $Kt$ Sendern seine eingestellte eigene Sicht $\tilde{V}^{(j)}$ des insgesamten Vorcodierers $V$ jedes Mal neu berechnet, wenn es eine Änderung bezüglich der statistischen Verteilungen der Quantisierungsfehler $\eta^{(i,j')}$ und $\eta^{(i,j)}$ gibt.

6. Verfahren nach einem der Ansprüche 1 bis 4, wobei der $j$-te Sender unter der Vielzahl von $K_t$ Sendern seine eingestellte eigene Sicht $\tilde{V}^{(j)}$ des insgesamten Vorcodierers V auf einer regelmäßigen Basis bei einer Auftrittsfrequenz neu berechnet, die durch eine Zeitperiode definiert ist, während welcher die statistischen Verteilungen der Quantisierungsfehler $\eta^{(i,j')}$ und $\eta^{(i,j)}$ als stabil angesehen werden.

7. Computerprogramm, das konfiguriert ist, um Programmcodeanweisungen zu umfassen, die in eine programmierbare Vorrichtung geladen werden können, zum Implementieren des Verfahrens nach einem der Ansprüche 1 bis 6, wenn die Programmcodeanweisungen durch die programmierbare Vorrichtung laufengelassen werden.

8. Informationsspeichermedium, das konfiguriert ist, um ein Computerprogramm zu speichern, das Programmcodeanweisungen umfasst, die in eine programmierbare Vorrichtung geladen werden können, zum Implementieren des Verfahrens nach einem der Ansprüche 1 bis 6, wenn die Programmcodeanweisungen durch die programmierbare Vorrichtung laufengelassen werden.

9. Sender, auf den als $j$-ter Sender unter einer Vielzahl von $K_t$ Sendern eines drahtlosen Kommunikationssystems Bezug genommen wird, die zum Durchführen von Sendungen von den $K_t$ Sendern zu einer Vielzahl von $K_r$ Empfängern über einen globalen MIMO-Kanal $H$ dank eines auf verteilte Art und Weise zu bestimmenden insgesamten Vorcodierers $V$ konfiguriert sind, wobei die Sender durch Koordinationsverbindungen mit eine begrenzte Datenrate implizierenden Quantisierungsoperationen miteinander verbunden sind, wobei der $j$-te Sender folgendes umfasst:

    - Mittel zum Bestimmen (S302) einer Anfangsversion $\tilde{V}^{(j)}$ des insgesamten Vorcodierers $V$ aus seiner eigenen Sicht $\hat{H}^{(j)}$ des globalen MIMO-Kanals $H$;
    - Mittel zum Quantisieren (S303) der bestimmten Anfangsversion $\tilde{V}^{(j)}$ des insgesamten Vorcodierers $V$ für weitere Sendungen zu den anderen Sendern unter den $K_t$ Sendern über die Koordinationsverbindungen, wodurch Quantisierungsfehler impliziert werden, und Mittel zum Senden entsprechend quantisierter Versionen der Anfangsversion $\tilde{V}^{(j)}$ des insgesamten Vorcodierers $V$;
    - Mittel zum Empfangen (S304), von jedem anderen $i$-ten Sender unter der Vielzahl von $K_t$ Sendern über die jeweilige Koordinationsverbindung $\ell_{i,j}$, einer quantisierten Version $W^{(i,j)}$ einer Anfangsversion des insgesamten Vorcodierers $V$, die der andere Sender aus seiner eigenen Sicht $\hat{H}^{(j)}$ des globalen MIMO-Kanals $H$ bestimmt hat, wobei $i$ von 1 bis $K_t$, $i \neq j$, gilt,
    - Mittel zum Erhalten (S305) statistischer Verteilungen der durch die Sendungen der quantisierten Versionen der Anfangsversion des insgesamten Vorcodierers $V$ zugezogenen Quantisierungsfehler auf den jeweiligen Koordinationsverbindungen;

- Mittel zum Optimieren (S306) einer Gruppe von Matrizenparametern $A_i^{(j)}$ einer multivariaten Kombinations-funktion $f$, die die quantisierten Versionen $W^{(i,j)}$ der Anfangsversionen des insgesamten Vorcodierers $V$ kombiniert, um eine eingestellte eigene Sicht $\tilde{V}^{(j)}$ des insgesamten Vorcodierers $V$ zu erhalten, wobei $W^{(i,j)}$ als Äquivalent zu der bestimmten Anfangsversion $\tilde{V}^{(j)}$ des insgesamten Vorcodierers $V$ angesehen wird und wobei die Matrizenparameter $A_i^{(j)}$ in Bezug auf eine Schätzung $g^{(j)}$ eines Bewertungsfaktors $g$ optimiert sind, der eine Leistungsfähigkeit der Sendungen von den $Kt$ Sendern zu den $K_r$ Empfängern darstellt, während die eigene Sicht $\hat{H}^{(j)}$ des globalen MIMO-Kanals $H$ anstelle des effektiven globalen MIMO-Kanals $H$ berücksichtigt wird, unter weiterer Berücksichtigung einer Schätzung der Gruppe von eingestellten eigenen Sichten $\{\tilde{V}^{(j')}\}_{j'\in[1,K_t]}$ des insgesamten Vorcodierers $V$ anstelle der durch die anderen Sender erhaltenen effektiven eingestellten Vorcodierer $\{\tilde{V}^{(j')}\}_{j'\in[1,K_t]}$, unter weiterer Berücksichtigung der folgenden Beziehung:

$$W^{(i,j')} = W^{(i,j)} + \eta^{(i,j')} - \eta^{(i,j)}$$

wobei $\eta^{(i,j')}$ Quantisierungsfehler auf der Koordinationsverbindung $\ell_{i,j'}$ darstellt und $\eta^{(i,j)}$ jeweils Quantisierungsfehler auf der Koordinationsverbindung $\ell_{i,j}$ darstellt, wobei j' von 1 bis Kt, $j' \neq j$, gilt, und unter weiterer Berücksichtigung der erhaltenen statistischen Verteilungen der Quantisierungsfehler anstelle der effektiven Quantisierungsfehler; und

- Mittel zum Teilnehmen an den Sendungen (S307) durch Anwenden eines Vorcodierers, der durch einen Teil der eingestellten eigenen Sicht $\tilde{V}^{(j)}$ des insgesamten Vorcodierers $V$ ausgebildet ist, der sich auf den $j$-ten Sender unter der Vielzahl von $K_t$ Sendern bezieht.


## Revendications

1. Procédé mis en oeuvre par un émetteur, appelé j$^{\text{ème}}$ émetteur, parmi une pluralité de $K_t$ émetteurs d'un système de communication sans fil pour effectuer des transmissions depuis les $K_t$ émetteurs vers une pluralité de $K_r$ récepteurs par l'intermédiaire d'un canal MIMO global H grâce à un précodeur global V à déterminer de manière distribuée, lesdits émetteurs étant interconnectés par des liaisons de coordination à débit limité impliquant des opérations de quantification, où ledit j$^{\text{ème}}$ émetteur effectue :

- déterminer (S302) une version initiale $\tilde{V}^{(j)}$ du précodeur global V à partir de sa propre vue $\hat{H}^{(j)}$ du canal MIMO global H ;
- quantifier (S303) la version initiale déterminée $\tilde{V}^{(j)}$ du précodeur global V pour des transmissions ultérieures aux autres émetteurs parmi les $K_t$ émetteurs par l'intermédiaire des liaisons de coordination, ce qui implique des erreurs de quantification, et transmettre en conséquence des versions quantifiées de la version initiale $\tilde{V}^{(j)}$ du précodeur global V ;
- recevoir (S304) depuis chaque autre i$^{\text{ème}}$ émetteur parmi la pluralité de $K_t$ émetteurs, par l'intermédiaire de la liaison de coordination respective $l_{i,j}$, d'une version quantifiée $W^{(i,j)}$ d'une version initiale du précodeur global V que ledit autre émetteur a déterminée à partir de sa propre vue $\hat{H}^{(i)}$ du canal MIMO global H, où i prend les valeurs de 1 à $K_t$, avec $i \neq j$,
- obtenir (S305) des distributions statistiques des erreurs de quantification subies par les transmissions des versions quantifiées des versions initiales du précodeur global V sur les liaisons de coordination respectives ;
- optimiser (S306) un ensemble de paramètres de matrices $A_i^{(j)}$ d'une fonction de combinaison à variables multiples f combinant les versions quantifiées $W^{(i,j)}$ des versions initiales du précodeur global V de manière à obtenir une vue propre ajustée $\tilde{V}^{(j)}$ du précodeur global V, où $W^{(i,j)}$ est considéré comme équivalent à la version initiale déterminée $\tilde{V}^{(j)}$ du précodeur global V, et où les paramètres de matrices $A_i^{(j)}$ sont optimisés par rapport à une estimation $g^{(j)}$ d'un facteur de mérite g représentatif de la performance des transmissions des $K_t$ émetteurs aux $K_r$ récepteurs, tout en considérant ladite propre vue $\hat{H}^{(j)}$ du canal MIMO global H au lieu du canal MIMO global H effectif, en considérant en outre une estimation de l'ensemble des vues propres ajustées $\{\tilde{V}^{(j')}\}_{j'\in[1,Kt]}$ du précodeur global V au lieu des précodeurs ajustés effectifs $\{\tilde{V}^{(j')}\}_{j'\in[1,Kt]}$ obtenus par lesdits autres émetteurs, en considérant en outre la relation suivante :

$$W^{(i,j')} = W^{(i,j)} + \eta^{(i,j')} - \eta^{(i,j)}$$

où $\eta^{(i,j')}$ représente des erreurs de quantification sur la liaison de coordination $l_{i,j'}$, et, respectivement $\eta^{(i,j)}$ représente des erreurs de quantification sur la liaison de coordination $l_{i,j}$, où j' prend les valeurs de 1 à $K_t$, avec j' ≠ j,

et en considérant en outre les distributions statistiques obtenues des erreurs de quantification au lieu des erreurs de quantification effectives ; et

- participer aux transmissions en appliquant un précodeur qui est formé par une partie de la vue propre ajustée $\tilde{V}^{(j)}$ du précodeur global V qui se rapporte audit $j^{\text{ème}}$ émetteur parmi ladite pluralité de $K_t$ émetteurs.

2. Procédé selon la revendication 1, dans lequel la fonction de combinaison à variables multiples f est définie sous l'une des formes suivantes :

$$f\left\{A_i^{(j)}\right\}_{i\in[1,K_t]}\left(\left\{W^{(i,j)}\right\}_{i\in[1,K_t]}\right) = \sum_{i=1}^{K_t}\left(A_i^{(j)}W^{(i,j)}\right)$$

$$f\left\{A_i^{(j)}\right\}_{i\in[1,K_t]}\left(\left\{W^{(i,j)}\right\}_{i\in[1,K_t]}\right) = \sum_{i=1}^{K_t}\left(W^{(i,j)}A_i^{(j)}\right)$$

$$f\left\{A_i^{(j)}\right\}_{i\in[1,K_t]}\left(\left\{W^{(i,j)}\right\}_{i\in[1,K_t]}\right) = \sum_{i=1}\left(W^{(i,j)}+A_i^{(j)}\right)$$

$$f\left\{A_i^{(j)}\right\}_{i\in[1,K_t]}\left(\left\{W^{(i,j)}\right\}_{i\in[1,K_t]}\right) = \sum_{i=1}^{K_t}\left(\left(W^{(i,j)}\right)^{-1}+\left(A_i^{(j)}\right)^{-1}\right)^{-1}$$

3. Procédé selon l'une quelconque des revendications 1 et 2, dans lequel le facteur de mérite g est défini comme suit :

$$g\left(H,\left\{\tilde{V}^{(j')}\right\}_{j'\in[1,K_t]}\right) = \log_2 det\left|I + H\begin{bmatrix}E_1\tilde{V}^{(1)}\\\vdots\\E_{K_t}\tilde{V}^{(K_t)}\end{bmatrix}\begin{bmatrix}E_1\tilde{V}^{(1)}\\\vdots\\E_{K_t}\tilde{V}^{(K_t)}\end{bmatrix}^{\dagger}H^{\dagger}\right|$$

où I est une matrice identité, et où $E_j$ est une matrice M x $NK_r$ telle que :

$$E_j = [0_{Mx(j-1)M}, I_{MxM}, 0_{Mx(Kt-j)M}]$$

où $O_{Mx(j-1)M}$ représente une sous-matrice M x (j - 1)M contenant uniquement des zéros, $O_{Mx(Kt-j)M}$ représente une sous-matrice M x (Kt - j)M contenant uniquement des zéros, et $I_{MxM}$ représente une sous-matrice identité M x M,

et ledit $j^{\text{ème}}$ émetteur parmi ladite pluralité de $K_t$ émetteurs utilise, dans l'expression du facteur de mérite g, une estimation de $\{W^{(i,j')}\}_{i\in[1,K_t]}$ s'appuyant sur $\{W^{(i,j)}\}_{i\in[1,K_t]}$ et sur les distributions statistiques des erreurs de quantification $\eta^{(i,j')}$ et $\eta^{(i,j)}$.

4. Procédé selon l'une quelconque des revendications 1 et 2, dans lequel le facteur de mérite g est défini comme suit :

$$g\left(H,\{\tilde{V}^{(j')}\}_{j'\in[1,K_t]}\right) = \sum_{k=1}^{K_r} Trace\left(I + B_k^{\dagger}H_k^{\dagger}\left(I + \sum_{l\neq k}^{K_r} H_k B_l B_l^{\dagger} H_k^{\dagger}\right) H_k B_k\right)$$

$$B_k = \begin{bmatrix} E_1 \tilde{V}^{(1)} \\ \vdots \\ E_{K_t} \tilde{V}^{(K_t)} \end{bmatrix} e_k \quad \text{avec}$$

où

$$e_k = [0_{Nx(k-1)N}, I_{NxN}, 0_{Nx(Kr-k)N}]^T$$

et où $E_j$ est une matrice M x $NK_r$ telle que :

$$E_j = [0_{Mx(j-1)M}, I_{MxM}, 0_{Mx(Kt-j)M}]$$

où $0_{Mx(j-1)M}$ représente une sous-matrice M x (j - 1)M contenant uniquement des zéros, $0_{Mx(Kt-j)M}$ représente une sous-matrice M x ($K_t$ - j)M contenant uniquement des zéros, et $I_{MxM}$ représente une sous-matrice identité M x M,

et ledit $j^{ème}$ émetteur parmi ladite pluralité de $K_t$ émetteurs utilise, dans l'expression du facteur de mérite g, une estimation de $\{W^{(i,j')}\}_{i\in[1,K_t]}$ s'appuyant sur $\{W^{(i,j)}\}_{i\in[1,K_t]}$ et sur les distributions statistiques des erreurs de quantification $\eta^{(i,j')}$ et $\eta^{(i,j)}$.

5. Procédé selon l'une quelconque des revendications 1 à 4, dans lequel ledit $j^{ème}$ émetteur parmi ladite pluralité de $K_t$ émetteurs recalcule sa propre vue ajustée $\tilde{V}^{(j)}$ du précodeur global V chaque fois qu'il y a un changement dans les distributions statistiques des erreurs de quantification $\eta^{(i,j')}$ et/ou $\eta^{(i,j)}$.

6. Procédé selon l'une quelconque des revendications 1 à 4, dans lequel ledit $j^{ème}$ émetteur parmi ladite pluralité de $K_t$ émetteurs recalcule sa propre vue ajustée $\tilde{V}^{(j)}$ du précodeur global V sur une base régulière à une fréquence d'occurrence qui est définie par une période de temps pendant laquelle les distributions statistiques des erreurs de quantification $\eta^{(i,j')}$ et $\eta^{(i,j)}$ sont considérées comme stables.

7. Programme d'ordinateur configuré pour comporter des instructions de code de programme qui peuvent être chargées dans un dispositif programmable pour mettre en oeuvre le procédé selon l'une quelconque des revendications 1 à 6, lorsque les instructions de code de programme sont exécutées par le dispositif programmable.

8. Support de stockage d'informations, configuré pour stocker un programme informatique comportant des instructions de code de programme qui peuvent être chargées dans un dispositif programmable pour mettre en oeuvre le procédé selon l'une quelconque des revendications 1 à 6, lorsque les instructions de code de programme sont exécutées par le dispositif programmable.

9. Émetteur, appelé $j^{ème}$ émetteur, parmi une pluralité de $K_t$ émetteurs d'un système de communication sans fil qui sont configurés pour effectuer des transmissions depuis les $K_t$ émetteurs vers une pluralité de $K_r$ récepteurs par l'intermédiaire d'un canal MIMO global H grâce à un précodeur global V à déterminer de manière distribuée, lesdits émetteurs étant interconnectés par des liaisons de coordination à débit limité impliquant des opérations de quantification, où ledit $j^{ème}$ émetteur comprend :

- des moyens pour déterminer (S302) une version initiale $\tilde{V}^{(j)}$ du précodeur global V à partir de sa propre vue $\hat{H}^{(j)}$ du canal MIMO global H ;
- des moyens pour quantifier (S303) la version initiale déterminée $\tilde{V}^{(j)}$ du précodeur global V pour des transmissions ultérieures aux autres émetteurs parmi les $K_t$ émetteurs par l'intermédiaire des liaisons de coordination, ce qui implique des erreurs de quantification, et des moyens pour transmettre en conséquence des versions quantifiées de la version initiale $\tilde{V}^{(j)}$ du précodeur global V ;
- des moyens pour recevoir (S304) depuis chaque autre $i^{ème}$ émetteur, par l'intermédiaire de la liaison de

coordination respective $I_{i,j}$, une version quantifiée $W^{(i,j)}$ d'une version initiale du précodeur global V que ledit autre émetteur a déterminée à partir de sa propre vue $\hat{H}^{(i)}$ du canal MIMO global H, où i prend les valeurs de 1 à $K_t$, avec i ≠ j,

- des moyens pour obtenir (S305) des distributions statistiques des erreurs de quantification subies par les transmissions des versions quantifiées des versions initiales du précodeur global V sur les liaisons de coordination respectives ;

- des moyens pour optimiser (S306) un ensemble de paramètres de matrices $A_i^{(j)}$ d'une fonction de combinaison à variables multiples f combinant les versions quantifiées $W^{(i,j)}$ des versions initiales du précodeur global V de manière à obtenir une vue propre ajustée $\tilde{V}^{(j)}$ du précodeur global V, où $W^{(j,j)}$ est considéré comme équivalent à la version initiale déterminée $\tilde{V}^{(j)}$ du précodeur global V, et où les paramètres de matrices $A_i^{(j)}$ sont optimisés par rapport à une estimation $g^{(j)}$ d'un facteur de mérite g représentatif de la performance des transmissions des $K_t$ émetteurs aux $K_r$ récepteurs, tout en considérant ladite propre vue $\hat{H}^{(j)}$ du canal MIMO global H au lieu du canal MIMO global H effectif, en considérant en outre une estimation de l'ensemble des vues propres ajustées $\{\tilde{V}^{(j')}\}_{j' \in [1,Kt]}$ du précodeur global V au lieu des précodeurs ajustés effectifs $\{\tilde{V}^{(j')}\}_{j' \in [1,Kt]}$ obtenus par lesdits autres émetteurs, en considérant en outre la relation suivante :

$$W^{(i,j')} = W^{(i,j)} + \eta^{(i,j')} - \eta^{(i,j)}$$

où $\eta^{(i,j')}$ représente des erreurs de quantification sur la liaison de coordination $I_{i,j'}$, et, respectivement $\eta^{(i,j)}$ représente des erreurs de quantification sur la liaison de coordination $I_{i,j}$, où j' prend les valeurs de 1 à $K_t$, avec j' ≠ j,

et en considérant en outre les distributions statistiques obtenues des erreurs de quantification au lieu des erreurs de quantification effectives ; et

- des moyens pour participer auxdites transmissions (S307) en appliquant un précodeur qui est formé par une partie de la vue propre ajustée $\tilde{V}^{(j)}$ du précodeur global V qui se rapporte audit $j^{ème}$ émetteur parmi ladite pluralité de $K_t$ émetteurs.

100

120a                    121                    120b

TX ◄─────────────► TX

111a                                        111d

        111b

RX ◄ ─ ─ ─ ─ ─       RX

        111c

110a                                        110b

# Fig. 1

| 203 HDD |   | 200 CPU |
| 204 COM1 |   | 201 RAM |
| 205 COM2 |   | 202 ROM |

206

# Fig. 2

Obtaining short-term CSIT $\leftthreetimes$S301

Determining a precoder according to the short-term CSIT $\leftthreetimes$S302

Quantizing the determined precoder and transmitting the quantized precoder to other transmitters $\leftthreetimes$S303

Receiving quantized precoders from the other transmitters $\leftthreetimes$S304

Obtaining statistical distributions of quantization errors $\leftthreetimes$S305

Optimizing matrices parameters of a multivariate combination function combining the precoders according to the statistical distributions of quantization errors $\leftthreetimes$S306

Applying distributed precoding according to the multivariate combination function with the optimized matrices parameters $\leftthreetimes$S307

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8588801 B2

### Non-patent literature cited in the description

- **RUI ZHANG.** Cooperative Multi-Cell Block Diagonalization with Per-Base-Station Power Constraints. *IEEE Journal on Selected Areas in Communications,* December 2010, vol. 28 (9), 1435-1445
- **CHAN-BYOUNG CHAE et al.** Interference Aware-Coordinated Beamforming in a Multi-Cell System. *IEEE Transactions on Wireless Communications,* October 2012, vol. 11 (10), 3692-3703
- **JUN ZHANG et al.** A large system analysis of cooperative multicell downlink system with imperfect CSIT. *IEEE International Conference on Communications (ICC),* 10 June 2012, 4813-4817